# EUROPEAN PATENT APPLICATION

(11) **EP 4 578 902 A1**
(43) Date of publication of application: **02.07.2025**
(21) Application number: 24223021.7
(22) Date of filing: 23.12.2024
(51) Int. Cl.: C08J 11/08

(54) **RECYCLED PLASTIC AND PREPARATION PROCESS AND USE THEREOF**

(30) Priority: 28.12.2023 US 202363615608 P; 11.10.2024 TW 113138644
(71) Applicant: Singtex Industrial Co., Ltd., New Taipei City 248020 (TW)
(72) Inventor: CHEN, Kuo-Chin, 248020 NEW TAIPEI CITY (TW); HUANG, Sung-Yun, 248020 NEW TAIPEI CITY (TW); CHANG, Li-Hsun, 248020 NEW TAIPEI CITY (TW); CHEN, Chia-Lin, 248020 NEW TAIPEI CITY (TW); YU, Chin-Hung, 248020 NEW TAIPEI CITY (TW); CHEN, Chun-An, 328454 TAOYUAN CITY (TW); CHUANG, Yu-Ping, 248020 NEW TAIPEI CITY (TW)
(74) Representative: DREISS Patentanwälte PartG mbB

(57) **Abstract**

A method for preparing a recycled plastic includes the steps of: a) mixing a waste plastic with a depolymerizing agent, followed by subjecting the waste plastic to a depolymerization reaction, so as to obtain a depolymerized product; b) mixing the depolymerized product with a first polyether polyol to obtain a first mixture, followed by subjecting the first mixture to a polymerization reaction, so as to obtain a polymeric diol mixture; and c) mixing the polymeric diol mixture with a second polyether polyol, a multi-functional isocyanate, and a solvent to obtain a second mixture, followed by subjecting the second mixture to a reaction, thereby obtaining the recycled plastic having a carbamate group. A recycled plastic prepared by the aforesaid method, a non-porous film or a microporous film obtained from the recycled plastic, and a composite fabric including the non-porous film or the microporous film are also provided.

## Description

The disclosure relates to a method for preparing a recycled plastic, and a recycled plastic prepared by the method. The disclosure also relates to a non-porous film or a microporous film obtained from the recycled plastic, and a composite fabric including the non-porous film or the microporous film.

At present, a fiber material made of a single component or a material containing at least 97% of polyester fiber are the main sources for recycling of waste apparel or waste fabrics, because only these materials can be processed into regenerated fibers after being subjected into a recycling process, such as a physical recycling process (e.g., a mechanical cutting or crushing treatment, followed by injection granulation), a chemical recycling process (e.g., a decolorization treatment and an alcoholysis treatment, followed by repolymerization), and so forth.

However, a film made of the abovementioned regenerated fibers usually fall short of meeting the requirements for serving as a waterproof and moisture-permeable fabric.

Therefore, an object of the disclosure is to provide a method for preparing a recycled plastic, a recycled plastic prepared by the method, a non-porous film or a microporous film formed from the aforesaid recycled plastic, and a composite fabric including the non-porous film or the microporous film that can alleviate at least one of the drawbacks of the prior art.

According to a first aspect of the disclosure, there is provided the method for preparing the recycled plastic according to claim 1.

According to a second aspect of the disclosure, there is provided the recycled plastic prepared by the aforesaid method according to claim 9.

According to a third aspect of the disclosure, there is provided the non-porous film formed from the aforesaid recycled plastic according to claim 10.

According to a fourth aspect of the disclosure, there is provided the microporous film formed from the aforesaid recycled plastic according to claim 11.

According to a fifth aspect of the disclosure, there is provided the composite fabric including the aforesaid non-porous film according to claim 12.

According to a sixth aspect of the disclosure, there is provided the composite fabric including the aforesaid microporous film according to claim 13.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a method for preparing a recycled plastic, which includes the steps of:
a) mixing a waste plastic composed of a polyester terephthalate and a polyurethane with a depolymerizing agent, followed by subjecting the waste plastic to a depolymerization reaction at a first temperature, so as to obtain a depolymerized product, the depolymerized product including a first monomer and a second monomer respectively represented by formulae (I) and (II),

   HO-**Rₓ**-OOC-Ph-COO-**R'ₓ**-OH (I),

   and

   HO-**Rₓ**-OOC-HN-**R**-NH-COO-**R'ₓ**-OH (II)

   wherein,
   Ph represents a benzene ring,
   **Rₓ** and **R'ₓ** are each independently selected from the group consisting of -CH₂CH₂-, -CH₂CH₂OCH₂CH₂-, -(CH₂CH₂O)ₙ-, and -(CH₂CH₂O)ₙCH₂CH₂-, where n is an integer ranging from 6 to 23, and
   R is selected from the group consisting of a diphenylmethanediyl group, a toluenediyl group, 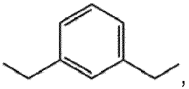 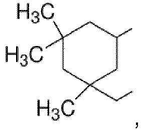 and -CH₂CH₂CH₂CH₂CH₂CH₂-;
b) mixing the depolymerized product with a first polyether polyol to obtain a first mixture, followed by subjecting the first mixture to a polymerization reaction at a second temperature, so as to obtain a polymeric diol mixture; and
c) mixing the polymeric diol mixture with a second polyether polyol, a multi-functional isocyanate, and a solvent to obtain a second mixture, followed by subjecting the second mixture to a reaction at a third temperature, thereby obtaining the recycled plastic having a carbamate group.

In certain embodiments, the first temperature may be higher than the second temperature, and the second temperature may be higher than the third temperature.

In certain embodiments, in step c), the multi-functional isocyanate may be mixed with the polymeric diol mixture in two stages.

In certain embodiment, the multi-functional isocyanate may be selected from the group consisting of methylene diphenyl diisocyanate, toluene diisocyanate, *m*-xylylene diisocyanate, isophorone diisocyanate, and hexamethylene diisocyanate.

In certain embodiments, the depolymerizing agent may be selected from the group consisting of ethylene glycol, propylene glycol, diethylene glycol, polyethylene glycol, and combinations thereof.

In certain embodiments, the first polyether polyol and the second polyether polyol may be each independently selected from the group consisting of a polyethylene glycol, a poly(tetramethylene ether) glycol, and a polypropylene glycol.

In certain embodiments, in step c), the second mixture may further contain a small-molecule polyol.

In certain embodiments, the small-molecule polyol may be selected from the group consisting of ethylene glycol, 1,3-propanediol, propylene glycol, 1,4-butanediol, and 1,6-hexanediol.

The present disclosure also provides a recycled plastic, which is prepared by the aforesaid method.

The present disclosure further provides a non-porous film, which is obtained by allowing the above-mentioned recycled plastic to be coated into a thin layer, followed by subjecting the thin layer to a heat treatment. The non-porous film has a thickness ranging from 10 µm to 30 µm, a basis weight ranging from 10 g/m² to 30 g/m², a hydrostatic pressure resistance of greater than 10000 mmH₂O as measured in accordance with the Japanese Industrial Standards (JIS) L1092B, and a moisture vapor transmission rate (MVTR) of greater than 120000 g/m²·24 hours as measured in accordance with the JIS L1099B1.

Additionally, the present disclosure provides a microporous film, which is obtained by allowing the above-mentioned recycled plastic to be coated into a thin layer, followed by subjecting the thin layer to coagulation, washing, and a heat treatment in sequence. The microporous film has a thickness ranging from 30 µm to 90 µm, a basis weight ranging from 10 g/m² to 30 g/m², a hydrostatic pressure resistance of greater than 10000 mmH₂O as measured in accordance with the JIS L1092B, and a moisture vapor transmission rate (MVTR) of greater than 3000 g/m²·24 hours as measured in accordance with the JIS L1099A1.

Moreover, the present disclosure provides a composite fabric, which includes a base fabric and the above-mentioned non-porous film attached to the base fabric.

Furthermore, the present disclosure provides another composite fabric, which includes a base fabric and the above-mentioned microporous film attached to the base fabric.

The present disclosure will be further described by way of the following examples. However, it should be understood that the following examples are intended solely for the purpose of illustration and should not be construed as limiting the present disclosure in practice.

### Preparation of recycled plastic

### <Example 1>

The procedures for preparing the recycled plastic of Example 1 includes the following steps a) to c).

First, in step a), 1000 g of a first waste fabric made of artificial composite fibers (fibers of polyester terephthalate coated with polyurethane, in which, based on 100 wt% of the artificial composite fibers, the polyurethane was present in an amount of 20 wt% and the polyester terephthalate was present in an amount of 80 wt%), 2760 g of diethylene glycol (DEG, serving as a depolymerizing agent), 0.5 g of zinc acetate (serving as a catalyst), and 0.6 g of Irganox^{®} 1010 (serving as an antioxidant) were mixed, and then stirred in a nitrogen environment at a first temperature of 240°C for 2 hours to 3 hours, so as to depolymerize the waste fabric, followed by cooling down to 150°C, thereby obtaining a first mixture. Subsequently, the first mixture was subjected to filtration using a stainless steel filter (pore size: 10 µm) coated with diatomaceous earth, thereby obtaining a depolymerized product.

Thereafter, in step b), 3762.1 g of the depolymerized product obtained in step a), 640 g of a polyethylene glycol (PEG2000; serving as a first polyether polyol), and 0.1 g of titanium isopropoxide (serving as a catalyst) were mixed, and then heated to a second temperature ranging from 160°C to 200°C, so as to allow a polymerization reaction to proceed, thereby obtaining a polymeric diol mixture (having a hydroxyl value of 20.6 mgKOH/g, a number average molecular weight of 5446, and a polydispersity index (PDI) of 5.51). Additionally, during the polymerization reaction, vacuuming (an absolute pressure being controlled to be not greater than 10 torr) was performed to remove an excess amount of the DEG and by-products (such as ethylene glycol) remaining in the depolymerized product.

Subsequently, in step c), 171.96 g of the polymeric diol mixture obtained in step b), 22.73 g of a polyethylene glycol (PEG2000; serving as a second polyether polyol), 23.25 g of 1,4-butanediol (BDO; serving as a small-molecule polyol), 0.1 g of stannous octoate (T9; serving as a catalyst), 0.1 g of Irganox^{®} 1010 (serving as an antioxidant), and 698.34 g of *N,N*-diethylformamide (DEF; serving as a solvent) were mixed, and then stirred at 60°C for 30 minutes, so as to obtain a second mixture. After that, 48.8 g of 4,4'-methylene diphenyl diisocyanate (4,4'-MDI; serving as a multi-functional isocyanate) was slowly added to the second mixture to allow an exothermic reaction to proceed, thereby obtaining a third mixture. After termination of the exothermic reaction, the third mixture thus obtained was stirred at a third temperature of 80°C (specifically, an external temperature controlling means was used to keep the third mixture at such temperature) for 2 hours, followed by slowing adding thereto 32.552 g of 4,4'-MDI, so as to allow a reaction to proceed at the third temperature (80°C) for 3 hours to 4 hours, thereby obtaining the recycled plastic with a carbamate group of Example 1, which had a solid content of approximately 30% and a viscosity of approximately 56270 cP.

### <Example 2>

The procedures for preparing a recycled plastic of Example 2 were similar to those described in Example 1, except that: in step a), the 1000 g of the first waste fabric was replaced by 1000 g of a second waste fabric made of artificial composite fibers (fibers of polyester terephthalate coated with polyurethane, in which, based on 100 wt% of the artificial composite fibers, the polyurethane was present in an amount of 45 wt%, and the polyester terephthalate was present in an amount of 55 wt%); in step b), the 640 g of the PEG2000 serving as the first polyether polyol was replaced by 640 g of a poly(tetramethylene ether) glycol (PTMEG1000); and in step c), the 22.73 g of the PEG 2000 serving as the second polyether polyol was replaced by 22.73 g of another poly(tetramethylene ether) glycol (PTMEG2000). The recycled plastic with a carbamate group of Example 2 thus obtained had a solid content of approximately 25% and a viscosity of approximately ranging from 20000 cP to 40000 cP.

### Preparation of non-porous film and property evaluation thereof

The recycled plastic of Example 1 was coated on a release paper to form a thin layer (having a width of approximately 62 inches), and then the thin layer on the release paper was subjected to a heat treatment by passing through an oven (having a length of 28 m, and a temperature gradient distribution along the length was presented as follows: 60°C (from the 0^{th} meter to the 4^{th} meter), 80°C (from the 4^{th} meter to the 8^{th} meter), 110°C (from the 8^{th} meter to the 12^{th} meter), 130°C (from the 12^{th} meter to the 16^{th} meter), and 150°C (from the 16^{th} meter to the 28^{th} meter)) at a delivering rate of 15 m/minute, thereby forming a non-porous film on the release paper, followed by separating the non-porous film from the release paper, so as to obtain the non-porous film of Example 1 having a thickness ranging from 19 µm to 20 µm and a basis weight ranging from 16.7 g/m² to 17.0 g/m².

Thereafter, the non-porous film of Example 1 was subjected to determination of hydrostatic pressure resistance in accordance with the Japanese Industrial Standards (JIS) L1092B (n=3), and further, to determination of moisture vapor transmission rate (MVTR) in accordance with the JIS L1099B1 (n=3). The results showed that the hydrostatic pressure resistance of the non-porous film of Example 1 was greater than 15000 mmH₂O, and the average moisture vapor transmission rate (MVTR) thereof was 125776 g/m²·24 hours.

### Preparation of microporous film and property evaluation thereof

The recycled plastic of Example 2 was coated on a polyethylene terephthalate (PET) woven fabric (40 D × 40 D) that was coated with a release agent, so as to form a thin layer (having a width of approximately 60 inches). Next, the thin layer on the PET woven fabric was passed, at a delivering rate of 18 m/minute, through a coagulation tank (having a length of 18 m) containing an aqueous solution with 15% of *N,N*-dimethylformamide (DMF), and then through a washing tank that is divided into five sections (specifically, sequentially through the five sections, each section containing pure water of 45°C, and having a length of 2 m), and subsequently, was subjected to a heat treatment by passing through an oven (having a length of 15 m, and a temperature gradient distribution along the length was presented as follows: 120°C (from the 0^{th} meter to the 3^{rd} meter), 130°C (from the 3^{rd} meter to the 6^{th} meter), 140°C (from the 6^{th} meter to the 9^{th} meter), and 150°C (from the 9^{th} meter to the 15^{th} meter)) at a delivering rate of 18 m/minute, thereby obtaining a semi-finished film coated on the PET woven fabric. The semi-finished film was then separated from the PET woven fabric by winding using a substrate peeling machine (HWAI YUH MACHINERY CO., LTD.; Model: HYK-1126-4), thereby obtaining a microporous film of Example 2 having a thickness of approximately 56 µm, a basis weight of approximately 22.1 g/m², and a pore size of not greater than 2 µm.

Thereafter, the microporous film of Example 2 was subjected to determination of hydrostatic pressure resistance in accordance with the JIS L1092B (n=3), and further, to determination of moisture vapor transmission rate (MVTR) in accordance with the JIS L1099A1 (n=3). The results showed that the hydrostatic pressure resistance of the microporous film of Example 2 was approximately 10500 mmH₂O, and the moisture vapor transmission rate (MVTR) thereof was approximately 3400 g/m²·24 hours.

### Preparation of composite fabric and property evaluation thereof

A surface of each of the non-porous film of Example 1 and the microporous film of Example 2 was coated with a reactive hot melt polyurethane adhesive (DIC Corporation, Japan; Model: TYFORCE NH-321) that was preheated to 100°C, and then the non-porous film of Example 1 and the microporous film of Example 2 were respectively adhered to two polyethylene terephthalate (PET) woven fabrics (30 D × 30 D; each serving as a base fabric), thereby obtaining composite fabrics of Examples 1 and 2, respectively.

The composite fabric of Example 1 was subjected to determination of hydrostatic pressure resistance in accordance with the JIS L1092B, and further, to determination of moisture vapor transmission rate (MVTR) in accordance with the JIS L1099B1. In addition, the composite fabric of Example 2 was subjected to determination of hydrostatic pressure resistance in accordance with the JIS L1092B, and further, to determination of moisture vapor transmission rate (MVTR) in accordance with the JIS L1099A1. The results showed that the hydrostatic pressure resistance of the composite fabric of Example 1 was greater than 20000 mmH₂O, and the moisture vapor transmission rate (MVTR) thereof was greater than 30000 g/m²·24 hours, and that the hydrostatic pressure resistance of the composite fabric of Example 2 was greater than 10000 mmH₂O, and the moisture vapor transmission rate (MVTR) thereof was greater than 2000 g/m²·24 hours.

To sum up, the recycled plastic prepared from the method of the present disclosure can be made into a film (e.g., the non-porous film of Example 1 or the microporous film of Example 2) and a composite fabric (e.g., the composite fabric of Example 1 or Example 2 above) having waterproof and moisture-permeable effect, thereby achieving the purpose of the invention.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for preparing a recycled plastic, **characterized by** the steps of:
a) mixing a waste plastic composed of a polyester terephthalate and a polyurethane with a depolymerizing agent, followed by subjecting the waste plastic to a depolymerization reaction at a first temperature, so as to obtain a depolymerized product, the depolymerized product including a first monomer and a second monomer respectively represented by formulae (I) and (II),
HO-**Rₓ**-OOC-Ph-COO-**R'ₓ**-OH (I),
and
HO-**Rₓ**-OOC-HN-**R**-NH-COO-**R'ₓ**-OH (II)
wherein,
Ph represents a benzene ring,
**Rₓ** and **R'ₓ** are each independently selected from the group consisting of -CH₂CH₂-, -CH₂CH₂OCH₂CH₂-, -(CH₂CH₂O)ₙ-, and -(CH₂CH₂O)ₙCH₂CH₂-, where n is an integer ranging from 6 to 23, and
**R** is selected from the group consisting of a diphenylmethanediyl group, a toluenediyl group, 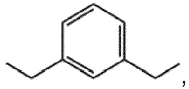 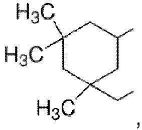 and -CH₂CH₂CH₂CH₂CH₂CH₂-;
b) mixing the depolymerized product with a first polyether polyol to obtain a first mixture, followed by subjecting the first mixture to a polymerization reaction at a second temperature, so as to obtain a polymeric diol mixture; and
c) mixing the polymeric diol mixture with a second polyether polyol, a multi-functional isocyanate, and a solvent to obtain a second mixture, followed by subjecting the second mixture to a reaction at a third temperature, thereby obtaining the recycled plastic having a carbamate group.

2. The method as claimed in claim 1, wherein the first temperature is higher than the second temperate, and the second temperature is higher than the third temperature.

3. The method as claimed in claim 1 or 2, wherein in step c), the multi-functional isocyanate is mixed with the polymeric diol mixture in two stages.

4. The method as claimed in any one of claims 1 to 3, wherein the multi-functional isocyanate is selected from the group consisting of methylene diphenyl diisocyanate, toluene diisocyanate, *m*-xylylene diisocyanate, isophorone diisocyanate, and hexamethylene diisocyanate.

5. The method as claimed in any one of claims 1 to 4, wherein the depolymerizing agent is selected from the group consisting of ethylene glycol, propylene glycol, diethylene glycol, polyethylene glycol, and combinations thereof.

6. The method as claimed in any one of claims 1 to 5, wherein the first polyether polyol and the second polyether polyol are each independently selected from the group consisting of a polyethylene glycol, a poly(tetramethylene ether) glycol, and a polypropylene glycol.

7. The method as claimed in any one of claims 1 to 6, wherein in step c), the second mixture further contains a small-molecule polyol.

8. The method as claimed in claim 7, wherein the small-molecule polyol is selected from the group consisting of ethylene glycol, 1,3-propanediol, propylene glycol, 1,4-butanediol, and 1,6-hexanediol.

9. A recycled plastic, **characterized in that** the recycled plastic is prepared by the method as claimed in any one of claims 1 to 8.

10. A non-porous film, **characterized in that** the non-porous film is obtained by allowing a recycled plastic as claimed in claim 9 to be coated into a thin layer, followed by subjecting the thin layer to a heat treatment, wherein the non-porous film has a thickness ranging from 10 µm to 30 µm, a basis weight ranging from 10 g/m² to 30 g/m², a hydrostatic pressure resistance of greater than 10000 mmH₂O as measured in accordance with the Japanese Industrial Standards L1092B, and a moisture vapor transmission rate of greater than 120000 g/m²·24 hours as measured in accordance with the Japanese Industrial Standards L1099B1.

11. A microporous film, **characterized in that** the microporous film is obtained by allowing a recycled plastic as claimed in claim 9 to be coated into a thin layer, followed by subjecting the thin layer to coagulation, washing, and a heat treatment in sequence, wherein the microporous film has a thickness ranging from 30 µm to 90 µm, a basis weight ranging from 10 g/m² to 30 g/m², a hydrostatic pressure resistance of greater than 10000 mmH₂O as measured in accordance with the Japanese Industrial Standards L1092B, and a moisture vapor transmission rate of greater than 3000 g/m²·24 hours as measured in accordance with the Japanese Industrial Standards L1099A1.

12. A composite fabric, **characterized by** a base fabric and a non-porous film as claimed in claim 10 attached to the base fabric.

13. A composite fabric, **characterized by** a base fabric and a microporous film as claimed in claim 11 attached to the base fabric.
